Europäisches Patentamt

European Patent Office

Office européen des brevets

(11) Veröffentlichungsnummer: **0 330 064**
**A2**

## (12) EUROPÄISCHE PATENTANMELDUNG

(21) Anmeldenummer: 89102580.1

(22) Anmeldetag: 15.02.89

(51) Int. Cl.⁴: **B60T 8/32**

(30) Priorität: 26.02.88 DE 3806213

(43) Veröffentlichungstag der Anmeldung:
30.08.89 Patentblatt 89/35

(84) Benannte Vertragsstaaten:
DE ES FR GB IT

(71) Anmelder: LUCAS INDUSTRIES public limited
company
Great King Street
Birmingham, B19 2XF West Midlands(GB)

(72) Erfinder: Barschel, Volker
Fliedergarten 57
D-5450 Neuwied 1(DE)

(74) Vertreter: von Hellfeld, Axel, Dipl.-Phys. Dr. et
al
Patentanwälte Wuesthoff- v.
Pechmann-Behrens-Goetz Schweigerstrasse
2
D-8000 München 90(DE)

(54) Verfahren zum Regeln des Bremsdruckes.

(57) Ein Verfahren zum Regeln des Bremsdruckes in
einer blockiergeschützten Fahrzeugbremsanlage
sieht vor, daß während eines Regelzyklus die Abweichung einer Regelgröße, wie des Schlupfes oder der
Verzögerung des Rades, von einem vorgegebenen
Sollwert $S_w$ ermittelt wird. In Abhängigkeit vom Betrag der Abweichung der Regelgröße vom Sollwert
wird ein für den Druckabbau an einem blockiergefährdeten Rad maßgeblicher Schwellenwert für den
nachfolgenden Regelzyklus verändert.

FIG.1

EP 0 330 064 A2

## Verfahren zum Regeln des Bremsdruckes

Die Erfindung betrifft ein Verfahren zum Regeln des Bremsdruckes in einer blockiergeschützten Fahrzeugbremsanlage, bei dem eine vom Drehverhalten eines gebremsten Rades bestimmte Regelgröße, wie der Schlupf und/oder die Verzögerung des Rades, gemessen und bei Überschreiten eines variablen Schwellenwertes der Bremsdruck gesenkt und später wieder erhöht wird.

Bei blockiergeschützten Fahrzeug-Bremsanlagen wird die Drehung der einzelnen Räder des Fahrzeuges ständig verfolgt und insbesondere der Schlupf der gebremsten Räder sowie ihre Verzögerung ermittelt, um eine Blockierneigung des Rades festzustellen und das Blockieren zu verhindern. Sobald der Radschlupf bzw. die Verzögerung eine Blockierneigung anzeigen, was dadurch festgestellt wird, daß bestimmte, vorgegebene Schwellenwerte bezüglich Schlupf und/oder Verzögerung überschritten werden, wird ein weiterer Anstieg des Druckes in der Bremse des betroffenen Rades beendet oder der Bremsdruck abgebaut.

Sobald das betroffene Rad aufgrund seiner Reibung mit der Fahrbahn wieder eine hinreichende Drehbeschleunigung erfahren hat, wird der Druck in der Bremse wieder erhöht, um mit dem Rad weitere Bremswirkung zu erzielen.

Bei der blockiergeschützten Regelung des Bremsdruckes geht es wesentlich darum, über alle Regelzyklen einer Bremsung die gebremsten Räder möglichst im günstigsten Bereich der bekannten Reibbeiwert/Schlupf-Kurve laufen zu lassen.

Es ist bereits bekannt, daß dieses Ziel dann besser erreicht werden kann, wenn der Schwellenwert in Abhängigkeit von gemessenen Parametern variiert wird. So wird in der DE-OS 33 45 729 zur Unterdrückung unerwünschter, durch Achsschwingungen oder dergleichen eingeleiteter Regelvorgänge der für die Einleitung der Regelung maßgebliche Schwellenwert in Abhängigkeit von der Hochlaufbeschleunigung des geregelten Rades im vorgegangenen Regelzyklus variiert.

In der DE-PS 27 06 278 wird ein Antiblockier-Regelsystem beschrieben, bei dem die Periodendauer der Regelzyklen laufend gemessen wird. In Abhängigkeit von der gemessenen Periodendauer eines Regelzyklus wird für den nachfolgenden Regelzyklus der Schwellenwert und/oder eine für die Einleitung einer Regelung maßgebliche Filterung verändert. Bei einer kurzen Periodendauer wird die Filterzeitspanne oder der Schwellenwert vergrößert, während bei einer langen Periodendauer die Filterzeit bzw. der Schwellenwert verkleinert werden.

Der Erfindung liegt die Aufgabe zugrunde, ein gattungsgemäßes Verfahren zum Einstellen eines Schwellenwertes bzw. einer Filterung derart weiterzubilden, daß während einer Bremsung die Umfangsgeschwindigkeit des gebremsten Rades möglichst im günstigsten Bereich der Reibwert/Schlupf-Kurve bleibt und trotzdem die Einleitung unerwünschter Regelvorgänge ausgefiltert wird.

Erfindungsgemäß wird diese Aufgabe bei einem Verfahren, das eine Änderung des Schwellenwertes vorsieht, dadurch gelöst, daß während zumindest eines Regelzyklus die Abweichung der Regelgröße von einem vorgegebenen Sollwert ermittelt und in Abhängigkeit von der Abweichung der Schwellenwert für zumindest den nachfolgenden Regelzyklus verändert wird.

Bei einem Verfahren, das eine Filterung zur Vermeidung unerwünschter Druckabsenkungen vorsieht, wird die Aufgabe erfindungsgemäß dadurch gelöst, daß während zumindest eines Regelzyk lus die Abweichung der Regelgröße von einem vorgegebenen Sollwert ermittelt und in Abhängigkeit von der Abweichung die Filterung für zumindest den nachfolgenden Regelzyklus eingestellt wird.

Der Erfindung liegt also die Erkenntnis zugrunde, daß ein Bremsvorgang hinsichtlich Bremsweg, Seitenführung und Stabilität dann optimiert werden kann, wenn der Schwellenwert bzw. eine Filterzeitspanne (wobei eine Veränderung des Schwellenwertes auch als Filterung verstanden werden kann) in Abhängigkeit davon eingestellt werden, wie stark in dem vorangegangenen Regelzyklus die Regelgröße einen vorgegebenen Sollwert überschritten oder unterschritten hat.

Die Regelgrößen und zugeordneten Schwellenwerte sind dem Fachmann bekannt (z.B. BOSCH TECHNISCHE BERICHTE, Bd. 7, 1980, Heft 2, S. 65 bis 94) und brauchen deshalb hier nicht näher erläutert zu werden. Als Regelgrößen kommen insbesondere der Schlupf $\Delta$ v des gebremsten Rades in bezug auf eine Referenzgeschwindigkeit und die Drehverzögerung des Rades in Betracht. Es ist auch bekannt, beide Regelgrößen und die zugeordneten Schwellenwerte zu kombinieren. Zur Vermeidung zu großer Regelabweichungen, d.h. großer Abweichungen der überwachten Regelgröße von ihrem optimalen Verlauf, welcher nahe der Referenzgeschwindigkeit liegt, wird der für die Einleitung einer Regelung (also einen Druckabbau) maßgebliche Schwellenwert so variiert, daß bei großen Ausschlägen der Regelgröße über den Sollwert der Schwellenwert gesenkt bzw. die Filterzeitspanne verkürzt werden. Der nachfolgende Regelzyklus findet dann eine empfindlichere Schwelle vor bzw. erfährt eine geringere Filterung, so daß die Regelabweichungen sich auf einen Sollwert einpendeln, bei dem hinreichende Seitenführung und Lenkfähigkeit des Rades erhalten bleiben und trotzdem das Rad im günstigsten Bereich der Reibbeiwert/Schlupf-Kurve läuft.

In einer bevorzugten Ausgestaltung der Erfindung ist vorgesehen, daß der für den Vergleich der Regelabweichungen maßgebliche Sollwert in Abhängigkeit von der Fahrzeuggeschwindigkeit verändert wird. Bei hohen Fahrzeuggeschwindigkeiten kann der Sollwert höher eingestellt werden als bei geringen Fahrzeuggeschwindigkeiten.

In einer weiteren Ausführungsform des erfindungsgemäßen Verfahrens wird der Sollwert, mit dem die Regelgröße verglichen wird, von der beim Einleiten einer Bremsung, d.h. beim ersten Regelzyklus festgestellten Radumfangsbeschleunigung, eingestellt. Es versteht sich, daß die Radumfangsbeschleunigung negative und positive Werte annehmen kann. Bei negativen Werten liegt also eine Radumfangsverzögerung vor. Bei großen Radumfangsverzögerungen sowie kleinen Radumfangsbeschleunigungen wird ein relativ kleiner Sollwert eingestellt. Umgekehrt wird bei kleinen Radumfangsverzögerungen und großen Radumfangsbeschleunigungen der Sollwert vergrößert.

Treten extrem hohe Radumfangsbeschleunigungen auf, so kann dies eine Anzeige dafür sein, daß eine sehr schlechte Fahrbahn vorliegt. Zum Beispiel werden extrem hohe Radbeschleunigungen in Schlaglöchern und bei Achsschwingungen erzeugt. Auch kann eine sehr schnelle Zeitfolge von Radumfangsbeschleunigungen und -verzögerungen (+b- und -b-Signale) anzeigen, daß eine schlechte Fahrbahn mit unregelmäßigen Reibbeiwerten, Löchern etc. vorliegt. Zeigen die vorstehend genannten Indikatoren eine schlechte Fahrbahn an, so wird bevorzugt ein hoher Sollwert vorgegeben, um ein Unterbremsen zu verhindern.

Bei einer hohen Fahrzeugverzögerung (zur Erläuterung dieses Begriffes siehe BOSCH TECHNISCHE BERICHTE, Bd. 7, 1980, Heft 2, S. 65 bis 94) kann davon ausgegangen werden, daß ein relativ hoher Haftbeiwert (auch Bremskraftbeiwert genannt) zwischen dem Reifen und der Fahrbahn vorliegt. In diesem Falle wird bevorzugt ein relativ niedriger Sollwert für den Vergleich mit der Regelgröße vorgegeben, um eine den Fahrer nicht irritierende, weitestgehend "rüttelfreie" Bremsung zu erzielen.

In einer weiteren Ausgestaltung der Erfindung ist vorgesehen, daß über mehrere aufeinanderfolgende Regelzyklen die Abweichungen der Regelgröße vom Sollwert integriert werden und daß der Schwellenwert bzw. die Filterzeitspanne in Abhängigkeit von dem Integral eingestellt werden. Hierbei gehen die in der Messung der Regelabweichungen in mehreren Zyklen enthaltenen Informationen in die Einstellung des Schwellenwertes bzw. der Filterzeitspanne ein.

Die Erfindung läßt sich auch bei einer sogenannten Anti-Schlupf-Regelung (ASR) einsetzen. AS-Regelungen werden auch im Stand der Technik bereits mit den vorstehend beschriebenen ABS-Anlagen durchgeführt. Mit einer AS-Regelung wird verhindert, daß beim Anfahren eines Fahrzeuges ein Rad durchdreht, insbesondere auf glatter Fahrbahn. Mit einer AS-Regelung ist also gewährleistet, daß beim Beschleunigen eines Fahrzeuges immer ein maximales Drehmoment von den Reifen auf die Fahrbahn übertragen wird. Üblicherweise weisen Antriebsräder eines Kraftwagens ein sogenanntes Ausgleichsgetriebe (Differential) auf. Der Antrieb der Räder erfolgt nicht auf einer durchgehenden Achse, sondern über das Ausgleichsgetriebe, welches eine geteilte Achse mit jeweils gleichem Drehmoment, aber verschiedenen Drehzahlen antreibt. Dreht deshalb ein Rad des Fahrzeuges durch, so wird auch das andere (nicht durchdrehende) Rad der Achse mit einem entsprechend geringen Drehmoment angetrieben, so daß die Räder insgesamt nicht ein maximales Drehmoment auf die Fahrbahn übertragen. Gemäß bekannten AS-Regelungen wird deshalb mit einer ebenfalls bekannten ABS-Regelanlage auch das Drehverhalten der Räder hinsichtlich eines möglichen Durchdrehens überwacht. Hierzu wird ermittelt, ob die Drehbeschleunigung eines Rades größer ist als ein vorgegebener Schwellenwert, der abhängig ist von der mit dem Fahrzeug bei optimaler Fahrbahn erzielbaren Beschleunigung. Sobald vorgegebene Schwellenwerte bezüglich der Drehbeschleunigung des Rades überschritten werden, wird das betroffene Rad zwangsweise und automatisch (also ohne daß der Fahrer das Bremspedal betätigen muß) gebremst, so daß über das Ausgleichsgetriebe am zuvor durchdrehenden Rad und auch am anderen Rad der Achse ein erhöhtes Drehmoment erzeugt werden kann. Eine solche AS-Regelung erfolgt ebenfalls mit einer Vielzahl von zeitlich schnell aufeinanderfolgenden Regelzyklen, was dem Fachmann als solches bekannt ist.

Die erfindungsgemäßen Verfahren lassen sich nun auch bei AS-Regelungen einsetzen. Auch bei ASR kann es nämlich zu unerwünschten, insbesondere durch Achsschwingungen oder dergleichen bedingten Schwellenwertüberschreitungen kommen, die unerwünscht zur Folge haben, daß an dem betroffenen Rad zu früh ein automatischer Bremsdruckaufbau erfolgt.

Somit lehrt die Erfindung auch ein Verfahren zum Regeln des Bremsdruckes in einer antischlupf-geregelten Fahrzeugbremsanlage, bei dem eine vom Drehverhalten eines angetriebenen Rades bestimmte Regelgröße, wie die Beschleunigung des Rades, gemessen und bei Überschreiten eines Schwellenwertes ein Bremsdruck erzeugt wird, um ein weiteres Durchdrehen des Rades zu verhindern, welches dadurch gekennzeichnet ist, daß im Verlaufe eines Regelspiels die Abweichung der Regelgröße, wie die Drehbeschleunigung des Rades, von einem vorgegebenen Sollwert gemessen und in Abhängigkeit von der Größe der Abweichung der Schwellenwert für zumindest das nachfolgende Regelspiel verändert wird.

Auch die Lehren der Ansprüche 2 bis 12 lassen sich analog von einer ABS-Regelung auf eine AS-Regelung übertragen.

Nachfolgend wird ein Ausführungsbeispiel der Erfindung anhand der Zeichnung näher erläutert. Es zeigt:

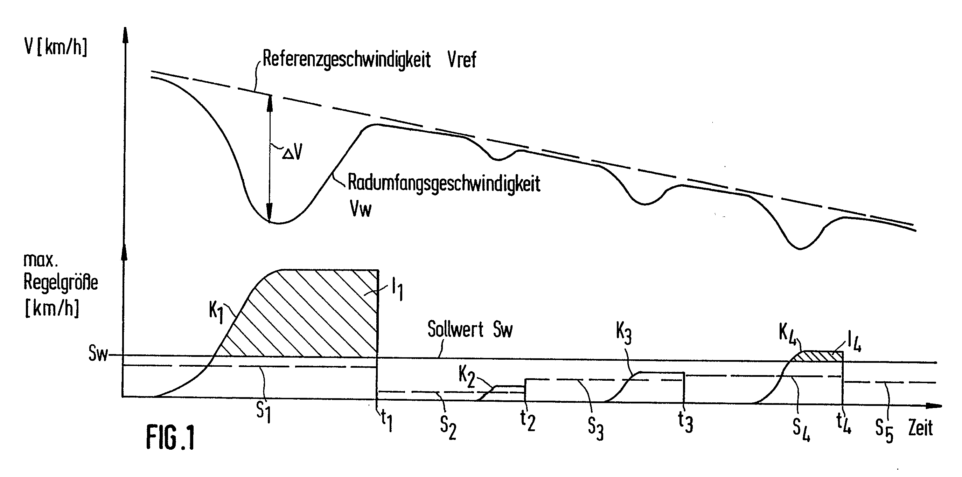

Fig. 1 über einer gemeinsamen Zeitskala den Verlauf der Referenzgeschwindigkeit, der Radumfangsgeschwindigkeit, des während eines Regelzyklus erreichten Maximalwertes der Regelgröße (hier: Δ v), des Sollwertes und der entsprechend eingestellten Schwellenwerte;

Fig. 2 über einer gemeinsamen Zeitskala den Verlauf der Referenzgeschwindigkeit, der Radumfangsgeschwindigkeit, (Fig. 2a); die Zeitfolge der einen sogenannten instabilen Radlauf anzeigenden Schwellenwertüberschreitungen (Fig. 2b); den Verlauf der Abweichung der Regelgröße (sogenannte Regelabweichung) vom Sollwert (Fig. 2c); den Verlauf des geänderten Schwellenwertes (Fig. 2d); und den zugehörigen Verlauf des Bremsdruckes (Fig. 2e); und

Fig. 3 ein schematisches Blockschaltbild einer Schaltung zur Ausführung eines erfindungsgemäßen Verfahrens.

Beim dargestellten Ausführungsbeispiel dient als Regelgröße der Schlupf Δ v zwischen der Radumfangsgeschwindigkeit $v_w$ und der sogenannten Referenzgeschwindigkeit $v_{ref}$. Die für die Messung der Radumfangsgeschwindigkeit erforderlichen Sensoren, die Auswerteelektronik und die Algorithmen zur Bildung der Referenzgeschwindigkeit sind dem Fachmann bekannt (siehe z.B. die obengenannten BOSCH TECHNISCHE BERICHTE). Auch die Mittel zum Steuern des Bremsdruckes sind bekannt, so daß sich die nachfolgende Beschreibung auf die wesentlichen Aspekte des erfindungsgemässen Verfahrens beschränken kann.

Die Figur zeigt schematisch vier typische Regelzyklen. Als Regelgröße dient hier der Schlupf Δ v des gebremsten Rades.

Während einer Bremsung wird laufend der Schlupf des gebremsten Rades ermittelt. Sobald der Schlupf einen vorgegebenen Schwellenwert S überschreitet, wird, gegebenenfalls nach Verstreichen einer Filter-Zeitspanne, der Bremsdruck abgebaut.

Im ersten Regelzyklus ist ein voreingestellter Schwellenwert $S_1$ wirksam. Weiterhin ist in einem der Verarbeitung der Signale und Erzeugung der Steuersignale dienenden Prozessor ein Soll wert Sw abgespeichert und es wird laufend der momentane Schlupf des gebremsten Rades abgespeichert. Der Schlupf erreicht im Minimum der Radumfangsgeschwindigkeit $v_w$ sein Maximum und die jeweils dem momentanen Wert des Schlupfes bis zum Maximalwert (die Kurve $K_1$ wird im Maximum "eingefroren") entsprechende Kurve $K_1$ erreicht hier ihren Endwert bis die Radumfangsgeschwindigkeit $v_w$ wieder annähernd die Referenzgeschwindigkeit $v_{ref}$ erreicht hat (Zeitpunkt $t_1$). Beim gezeigten Ausführungsbeispiel übersteigt die den Maximalwert der Regelgröße Δ v wiedergebende Kurve $K_1$ den Sollwert $S_w$ deutlich. Das Integral $l_1$ zwischen der Sollwert-Geraden und der Kurve $K_1$ ist ein Maß für die Abweichung der Regelgröße (hier des Schlupfes) gegenüber dem Sollwert und dient als Maß für die anschließende Neueinstellung des Schwellenwertes am Ende des ersten Regelzyklus, also zum Zeitpunkt $t_1$.

Da im ersten Regelzyklus die Regelgröße (Schlupf) den Sollwert $S_w$ deutlich überschritten hat, wird zum Zeitpunkt $t_1$ der wirksame Schwellenwert gegenüber dem zuvor herrschenden Ausgangs-Schwellenwert $S_1$ erheblich gesenkt, nämlich auf den geringeren Wert $S_2$, welcher eine empfindlichere Regelung bewirkt. Der Sollwert $S_w$ bleibt konstant.

Der anschließende Regelzyklus wird entsprechend der niedrigen Schwelle $S_2$ relativ früh eingeleitet und führt deshalb zu einem wesentlich geringeren "Ausschlagen" der Regelgröße.

Die analog der Kurve $K_1$ gebildete Kurve $K_2$ liegt deshalb vollständig unter dem Sollwert $S_w$. Am Ende des zweiten Regelzyklus zur Zeit $t_2$ wird deshalb der Schwellenwert auf den Pegel $S_3$ angehoben. Auch der nächste Regelzyklus ergibt einen Verlauf der maximalen Regelgröße unterhalb des Sollwertes $S_w$, so daß am Ende dieses Zyklus zur Zeit $t_3$ der Schwellenwert noch einmal angehoben wird, nämlich auf den höheren Wert $S_4$. Der im vierten Regelzyklus entstehende Verlauf der maximalen Regelgröße gemäß Kurve $K_4$ liegt aber wieder oberhalb des Sollwertes $S_w$, so daß am Ende des vierten Regelzyklus zur Zeit $t_4$ gemäß dem Integral $l_4$ der Schwellenwert auf den etwas geringeren Wert $S_5$ abgesenkt wird.

Wie der Figur zu entnehmen ist, ist der Betrag der Absenkung bzw. Anhebung des Schwellenwertes am Ende eines Regelzyklus davon abhängig, wie weit die maximale Regelgröße den Sollwert $S_w$ überschritten bzw. unterschritten hat. Mit anderen Worten, übersteigt die maximale Regelgröße den Sollwert $S_w$ erheblich, d.h. ist das Integral I entsprechend groß, so erfolgt anschließend eine entsprechend starke Absenkung des Schwellenwertes (vgl. Schwellewerte $S_1$ und $S_2$). Liegt umgekehrt der Verlauf der maximalen Regelgröße während eines Regelzyklus weit unter dem Sollwert $S_w$, so wird anschließend der Schwellenwert entsprechend deutlich angehoben (vgl. Schwellenwerte $S_2$ und $S_3$).

Bei den hier dargestellten Regelzyklen erfolgt der Druckaufbau am gebremsten Rad jeweils mit gleichem Anstiegsgradienten.

Beim dargestellten Ausführungsbeispiel dient der Schlupf zwischen der Radumfangsgeschwindigkeit und der Referenzgeschwindigkeit als Regelgröße. Es versteht sich für den Fachmann, daß analog als Regelgröße auch insbesondere die Rad-Drehverzögerung genommen werden kann.

Beim dargestellten Ausführungsbeispiel ist der Sollwert $S_w$ konstant. Der Sollwert kann aber auch mit der Fahrzeuggeschwindigkeit steigen.

Beim anhand der Figur beschriebenen Ausführungsbeispiel wird in Abhängigkeit vom Maß der Abweichung der Regelgröße vom Sollwert der nachfolgend wirksame Schwellenwert verändert. Statt des Schwellenwertes kann auch eine Filterzeitspanne (DE-PS 27 06 278) in Abhängigkeit vom Maß der Abweichung zwischen Regelgröße und Sollwert eingestellt werden. Die Filterzeitspanne tritt also anstelle des oben beschriebenen Schwellenwertes. Während der Filterzeitspanne wird keine Regelung (Druckabbau) eingeleitet, auch der Schwellenwert überschritten ist. Überschreitet die Abweichung der Regelgröße (in der Figur z.B. Kurve $K_1$) den Sollwert, so wird die Filterzeitspanne verkürzt (also eine empfindlichere Regelung eingeleitet), während dann, wenn die Regelgröße unter dem Sollwert $S_w$ bleibt die Filterzeitspanne verlängert, also eine weniger empfindliche Regelung durchgeführt wird. Im übrigen ist dem Fachmann klar, wie die oben anhand der Einstellung des Schwellenwertes erläuterten Grundsätze auf die Einstellung der Filterzeitspanne übertragbar sind.

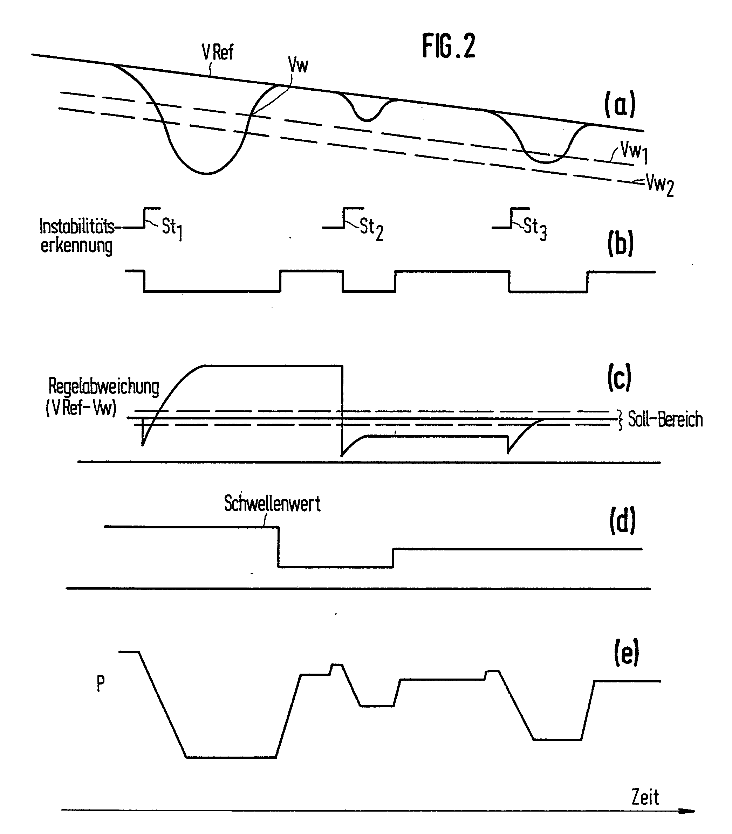

Fig. 2 zeigt, wie mit dem erfindungsgemäßen Verfahren die Regelgröße sich schon nach wenigen Regelzyklen auf einen gewünschten, günstigen Wert "einschwingt". Beim ersten Regelzyklus sinkt die Radumfangsgeschwindigkeit $v_w$ noch deutlich unter den angestrebten Bereich zwischen den Linien $v_{w1}$ und $v_{w2}$ ab. Beim zweiten Regelzyklus bleibt aufgrund des veränderten Schwellenwertes (Fig. 2d) die Radumfangsgeschwindigkeit über dem angestrebten Bereich (oberhalb der Linie $v_{w1}$; Fig. 2a), während aufgrund der dann erfindungsgemäß erfolgten Schwellenwertanhebung bereits im dritten Regelzyklus gemäß den Figuren 2a und 2c die Radumfangsgeschwindigkeit im gewünschten Soll-Bereich bleibt. Eine wesentliche Schwellenwertänderung ist dann nicht mehr erforderlich. Die Fig. 2b zeigt den zugehörigen Verlauf der durch Schwellenwertüberschreitungen ausgelösten Stabilitäts- bzw. Instabilitätssignale, also derjenigen Signale, die anzeigen, ob das Rad in einem stabilen (günstigen) Bereich der Reibbeiwert-/Schlupf-Kurve läuft oder in einem instabilen Bereich. Die Zeitpunkte, an denen eine Instabilität erkannt wird, sind mit $St_1$, $St_2$ und $St_3$ angedeutet.

Der zugehörige Verlauf des Bremsdruckes ist in Fig. 2e gezeigt.

Dem Fachmann sind heute die schaltungstechnischen Mittel zum Erzeugen der Meß und Steuersignale für den Druckaufbau- und abbau in einer ABS-Anlage bekannt.

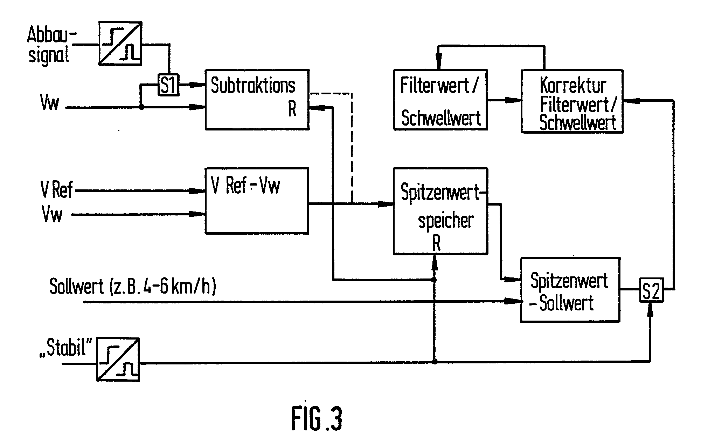

Fig. 3 zeigt schematisch ein Blockschaltbild einer einfachen Ausführungsform zum Regeln des Bremsdruckes mit festem Sollwert. In dem Funktionsblock "$v_{ref} - v_w$" wird die Differenz zwischen der Referenzgeschwindigkeit und der Radumfangsgeschwindigkeit gebildet und im nachgeschalteten Spitzenwertspeicher abgespeichert. Danach wird der abgespeicherte Spitzenwert mit dem vorgegebenen Sollwert Sw im Funktionsblock "Spitzenwert-Sollwert" verglichen. Bei einem Übergang des gebremsten Rades vom instabilen in den stabilen Zustand wird der Schalter S2 für kurze Zeit geschlossen (siehe Eingang "stabil"), was über die entsprechend bezeichneten Funktionsblöcke zu einer Korrektur des Schwellenwertes bzw. der Filterzeitspanne führt. Anstelle der Differenz $v_{ref} - v_w$ kann auch die Differenz zwischen der Radumfangsgeschwindigkeit zum Zeitpunkt eines Beginns eines Druckabbaus und der aktuellen Radumfangsgeschwindigkeit in den Spitzenwertspeicher abgespeichert werden. Hierzu wird am Beginn eines Druckabbaus der Schalter S1 kurzzeitig geschlossen und somit die Radumfangsgeschwindigkeit in den Subtrahierer geladen. Danach wird laufend die Differenz zwischen diesem abgespeicherten Wert und der momentanen Radumfangsgeschwindigkeit $v_w$ gebildet. Geht das Rad in einen stabilen Zustand über, werden die im Subtrahierer abgespeicherten Werte und der Wert im Spitzenwertspeicher gelöscht.

**Ansprüche**

1. Verfahren zum Regeln des Bremsdruckes in einer blockiergeschützten Fahrzeugbremsanlage, bei dem eine vom Drehverhalten eines gebremsten Rades bestimmte Regelgröße, wie der Schlupf und/oder die Verzögerung des Rades, gemessen und bei Überschreiten eines variablen Schwellenwertes (S) der Bremsdruck gesenkt und später wieder erhöht wird, wobei der Schwellenwert von einem Regelspiel aufgrund von in ihm gemessenen Daten zum nachfolgenden Regelspiel geändert wird
dadurch **gekennzeichnet,**
daß im Verlaufe eines Regelspiels die Abweichung der Regelgröße von einem vorgegebenen Sollwert (Sw) gemessen und in Abhängigkeit von der Größe der Abweichung der Schwellenwert (S) für zumindest das nachfolgende Regelspiel verändert wird.

2. Verfahren nach Anspruch 1,
dadurch **gekennzeichnet,**
daß der Schwellenwert bei den Sollwert überschreitenden Abweichungen gesenkt und bei unter dem Sollwert bleibenden Abweichungen erhöht wird.

3. Verfahren nach einem der Ansprüche 1 oder 2,
dadurch **gekennzeichnet,**
daß der Sollwert (Sw) in Abhängigkeit von der Fahrzeuggeschwindigkeit vorgegeben wird.

4. Verfahren nach einem der vorhergehenden Ansprüche,
dadurch **gekennzeichnet,**
daß der Sollwert (Sw) in Abhängigkeit von der Fahrzeugverzögerung vorgegeben wird.

5. Verfahren nach einem der vorhergehenden Ansprüche,
dadurch **gekennzeichnet,**
daß der Sollwert (Sw) in Abhängigkeit von der Radumfangsbeschleunigung und/oder -verzögerung vorgegeben wird.

6. Verfahren nach einem der vorhergehenden Ansprüche,
dadurch **gekennzeichnet,**
daß über mehrere aufeinanderfolgende Regelspiele die Abweichungen der Regelgröße vom Sollwert (Sw) integriert werden und daß der Schwellenwert in Abhängigkeit von dem Integral eingestellt wird.

7. Verfahren zum Regeln des Bremsdruckes in einer blockiergeschützten Fahrzeugbremsanlage, bei dem eine vom Drehverhalten eines gebremsten Rades bestimmte Regelgröße, wie der Schlupf und/oder die Verzögerung des Rades, gemessen und bei Überschreiten eines Schwellenwertes der Bremsdruck gesenkt und später wieder erhöht wird, wobei ein die Absenkung des Bremsdruckes einleitendes Signal gefiltert wird, um unerwünschte Druckabsenkungen zu verhindern, wobei die Filterung von einem Regelspiel aufgrund von in ihm gemessenen Daten zum nachfolgenden Regelspiel geändert wird,
dadurch **gekennzeichnet,**
daß während zumindest eines Regelspiels die Abweichung der Regelgröße von einem vorgegebenen Sollwert (Sw) gemessen und in Abhängigkeit von der Größe der Abweichung die Filterung für zumindest das nachfolgende Regelspiel eingestellt wird.

8. Verfahren nach Anspruch 7,
dadurch **gekennzeichnet,**
daß bei den Sollwert (Sw) um ein vorgegebenes Maß überschreitenden Abweichungen der Regelgröße eine Filterzeitspanne verkürzt und bei unter dem Sollwert bleibenden Abweichungen die Filterzeitspanne verlängert wird.

9. Verfahren nach einem der Ansprüche 7 oder 8,
dadurch **gekennzeichnet,**
daß der Sollwert in Abhängigkeit von der Fahrzeuggeschwindigkeit vorgegeben wird.

10. Verfahren nach einem der Ansprüche 7 bis 9,
dadurch **gekennzeichnet,**
daß der Sollwert (Sw) in Abhängigkeit von der Fahrzeugverzögerung vorgegeben wird.

11. Verfahren nach einem der Ansprüche 7 bis 10,
dadurch **gekennzeichnet,**
daß der Sollwert (Sw) in Abhängigkeit von der Radumfangsbeschleunigung und/oder -verzögerung vorgegeben wird.

12. Verfahren nach einem der Ansprüche 7 bis 11,
dadurch **gekennzeichnet,**
daß über mehrere aufeinanderfolgende Regelspiele die Abweichungen der Regelgröße vom Sollwert (Sw) integriert werden und daß die Filterung in Abhängigkeit von dem Integral eingestellt wird.

FIG.1

V [km/h]

Referenzgeschwindigkeit Vref

ΔV

Radumfangsgeschwindigkeit Vw

max.
Regelgröße
[km/h]

$K_1$

$I_1$

Sollwert Sw

$K_2$

$K_3$

$K_4$

$I_4$

Sw

$S_1$

$t_1$

$S_2$

$t_2$

$S_3$

$t_3$

$S_4$

$t_4$

$S_5$

Zeit

EP 0 330 064 A2

Lucas Industries p.l.c.
15.02.1989

Lucas Industries p.l.c.
15.02.1989

FIG.2

VRef

Vw

(a)

Vw$_1$

Vw$_2$

Instabilitätserkennung ⌐St$_1$    ⌐St$_2$    ⌐St$_3$

(b)

Regelabweichung
(VRef−Vw)

} Soll−Bereich

(c)

Schwellenwert

(d)

(e)

P

Zeit

Lucas Industries p.l.c.
15.02.1989

Abbau-signal

Vw

S1

Subtraktions
R

Filterwert /
Schwellwert

Korrektur
Filterwert/
Schwellwert

V Ref

Vw

V Ref - Vw

Spitzenwertspeicher
R

Sollwert (z.B. 4-6 km/h)

Spitzenwert
-Sollwert

S2

„Stabil"

FIG.3